Europäisches Patentamt

European Patent Office

Office européen des brevets

(19)

(11) Veröffentlichungsnummer: **0 057 752**
**B1**

(12) **EUROPÄISCHE PATENTSCHRIFT**

(45) Veröffentlichungstag der Patentschrift:
20.06.84

(21) Anmeldenummer: 81108635.4

(22) Anmeldetag: 21.10.81

(51) Int. Cl.³: **G 21 C 19/06,** G 21 C 19/40

(54) Lagergestell für stabförmige Brennelemente.

(30) Priorität: 29.01.81 DE 3103013

(43) Veröffentlichungstag der Anmeldung:
18.08.82 Patentblatt 82/33

(45) Bekanntmachung des Hinweises auf die Patenterteilung:
20.06.84 Patentblatt 84/25

(84) Benannte Vertragsstaaten:
FR SE

(56) Entgegenhaltungen:
DE - A - 2 753 468
FR - A - 2 422 230
FR - A - 2 433 225
FR - A - 2 433 226
US - A - 4 119 859
US - A - 4 124 445
US - A - 4 143 276

(73) Patentinhaber: **KRAFTWERK UNION
AKTIENGESELLSCHAFT, Wiesenstrasse 35,
D-4330 Mülheim (Ruhr) (DE)**

(72) Erfinder: **Ristow, Ulrich, Am Trieb 13,
D-6078 Neu-Isenburg (DE)**
Erfinder: **Friedrichs, Helmut, Grethenweg 145,
D-6000 Frankfurt 70 (DE)**
Erfinder: **Rudnick, Karl-Heinz,
Kurt-Schumacher-Ring 46, D-6072 Dreieich (DE)**
Erfinder: **Krainer, Franz, Schweizer Strasse 66,
D-6000 Frankfurt (DE)**

(74) Vertreter: **Mehl, Ernst, Dipl.-Ing. et al, Postfach 22 01 76,
D-8000 München 22 (DE)**

EP 0 057 752 B1

## Beschreibung

Die Erfindung betrifft ein Lagergestell für stabförmige Brennelemente mit polygonalem, vorzugsweise quadratischem Querschnitt, mit einem oberen und einem unteren Tragverband, durch den bestimmte Positionen für die Brennelemente festgelegt sind, und mit zwischen den Tragverbänden angeordneten Stützeinrichtungen, die als Rohre ausgebildet sind und mindestens eine Brennelement-Position umschliessen.

Mit dieser aus der DE-A-28 34 597 bekannten Bauweise soll die Haltekraft der Rohre, die den mechanischen Zusammenhalt für das gesamte Lagergestell und die Abstützung für die darin untergebrachten Brennelemente aufbringt, den erforderlichen Beanspruchungen angepasst werden. Als Beispiel ist genannt, dass in erdbebengefährdeten Gebieten mehr Stützeinrichtungen vorgesehen werden als wenn nicht mit Seitenkräften gerechnet werden müsste.

Die Erfindung geht von der Aufgabe aus, Lagergestelle der eingangs genannten Art so zu gestalten, dass sie aus vorgefertigten Komponenten aufgebaut werden können, die unabhängig vom jeweiligen Anwendungsfall hergestellt werden, aber dennoch leicht bestimmten Anforderungen, zum Beispiel den Abmessungen eines Brennelementlagerbeckens oder der Anzahl unterzubringender Brennelemente, angepasst werden können.

Gemäss der Erfindung ist vorgesehen, dass die Rohre am oberen und am unteren Ende durch angeschweisste Flansche verstärkt sind, dass an den oberen Flanschen Leisten befestigt sind, die zur Bildung des oberen Tragverbandes in an sich bekannter Weise Einschnitte aufweisen und mit diesen entsprechend dem Brennelement-Querschnitt winklig zueinander verschränkt sind, und dass die Rohre mit den unteren Flanschen am unteren Tragverband befestigt sind.

Bei der Erfindung können die Rohre ebenso wie die den oberen Tragverband bildenden Leisten vorgefertigt werden. Trotzdem ergibt sich durch den Zusammenbau über den gesamten Gestellquerschnitt eine stabile Konstruktion, die allen Beanspruchungen gewachsen ist. Dies gilt auch dann, wenn die Einschnitte vorteilhafterweise so ausgeführt werden, dass keine Biegemomente entstehen. Dies ist ein wesentlicher Unterschied gegenüber den aus den US-A-4 124 445 und US-A-4 143 276 bekannten Lagergestellen, die ebenfalls verschränkte Leisten umfassen.

Das Lagergestell nach der US-A 4 124 445 erhält praktisch seine gesamte Festigkeit in seitlicher Richtung, also insbesondere gegen Erdbebenkräfte, durch die aus den Leisten gebildeten Rahmen, die zu mehreren über die Höhe des Lagergestells verteilt und dort nur durch Zugstangen und diese eng umgebende Distanzrohre gehalten sind. Deshalb sind die Leisten an den Kreuzungsstellen auch miteinander verschweisst. Trotzdem sind aber noch schräge Streben erforderlich. Beides ist aufwendig, zumal das Schweissen nur am Aufstellungsort, also unter erschwerten Bedingungen erfolgen kann.

Das Lagergestell nach der US-A-4 143 276 umfasst schachbrettartig verteilte Vierkantrohre aus neutronenabsorbierendem Material, die in ihren Seitenflächen nach aussen ragende Versteifungsrippen aufweisen. Die Rohre sind über Abstandsstücke mit mehreren zueinander rechtwinkligen Armen miteinander verschweisst. Auf den Abstandhaltern liegen aus verschränkten Leisten gebildete Gitter, die über in vertikalen Ebenen diagonal verlaufende Streben miteinander verbunden sind. Da die Vierkantrohre mit ihrem unteren Ende zusätzlich mit einer Bodenplatte verschweisst sein sollen, liegt auch hier eine komplizierte Konstruktion mit einem hohen Fertigungs- und Montageaufwand vor.

Die Länge der Leisten ist vorteilhaft grösser als die Querschnittsabmessungen der Rohre, und zwar entspricht sie insbesondere den Querschnittsabmessungen des Lagergestells. Die Höhe der Leisten soll dagegen kleiner als die Breite des Brennelementquerschnittes sein, weil es nicht wie bei dem Lagergestell nach der deutschen Gebrauchsmusterschrift DE-U-78 24 120 darauf ankommt, die Brennelemente über ihre ganze Länge einzuhüllen, sondern nur die räumliche Lage der Brennelemente mit einfachen Mitteln festzulegen.

An den Leisten können Führungsstücke lösbar befestigt sein, die das Einführen der Brennelemente ermöglichen. Vorzugsweise haben sie zu diesem Zweck Schrägen, die eine trichterförmige Gestaltung des oberen Randes von die Brennelement-Position bestimmenden Schächten zur Folge haben.

Die Länge der Führungsstücke ist zweckmässig kürzer als die Kantenlänge der Brennelemente, weil die Führungsstücke dann leicht auf die Leisten aufgesetzt werden können. Besonders günstig ist es, wenn die Führungsstücke einen zumindest weitgehend symmetrischen Querschnitt aufweisen und jeweils zur Führung von zwei Brennelementen auf gegenüberliegenden Seiten der Leisten dienen.

Mit den Leisten können nicht nur die Brennelemente selbst, sonder auch Hüllen aus neutronenabsorbierendem Material festgelegt werden, die in bekannter Weise die Brennelement-Position umschliessen.

Zur näheren Erläuterung der Erfindung wird anhand der beiliegenden Zeichnung ein Ausführungsbeispiel beschrieben.

Es zeigen die Fig. 1 eine schematische Darstellung eines Brennelement-Lagergestells nach der Erfindung in einer Draufsicht, die Fig. 2 eine Seitenansicht eine Gestells nach der Erfindung, die Fig. 3a, 3b und 4 in grösserem Massstab Einzelheiten von Ausschnitten des Gestells.

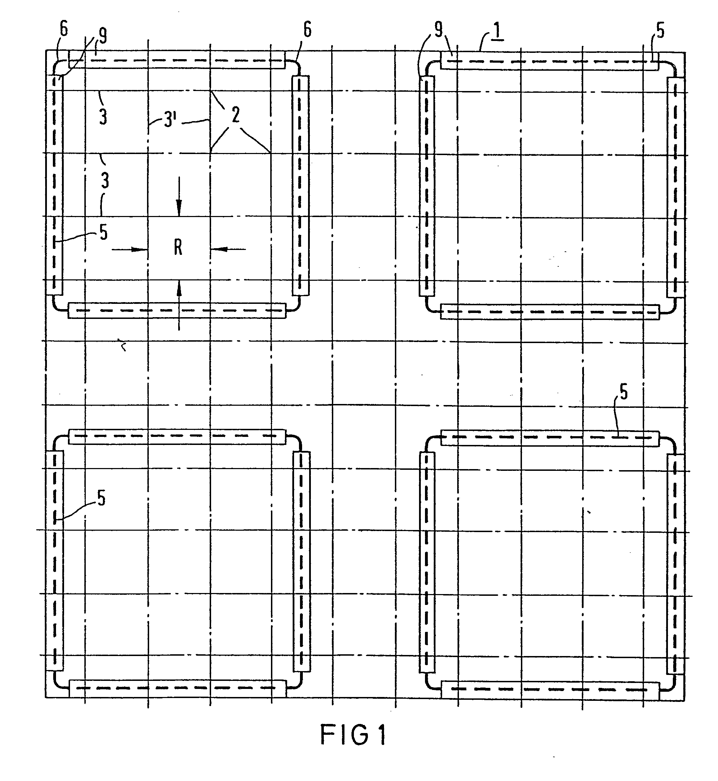

Wie Fig. 1 erkennen lässt, ist das Gestell 1 im Grundriss quadratisch. Die Brennelement-Positionen 2 sind durch die Schnittpunkte von strichpunktierten Linien 3 und 3' gegeben. Das Rastermass R beträgt 165 mm, weil das Gestell für 100 quadratische Brennelemente 4 von Siedewasserreaktoren vorgesehen ist, die einen quadratischen Querschnitt mit 140 mm Kantenlänge und eine Länge von 4470 mm haben.

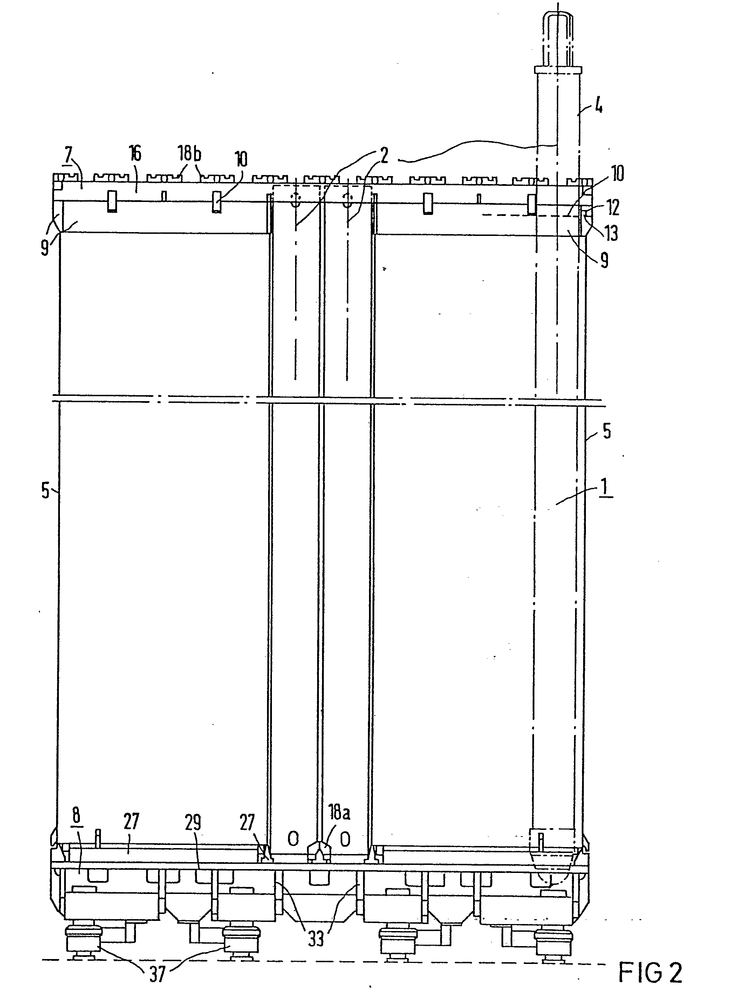

In den Ecken des Gestellquerschnittes sind als Stützeinrichtungen vier gleiche Rohre 5 angeordnet, die mit einer ihrer Ecken 6 in eine Gestellecke ragen und mit ihrem quadratischen Querschnitt jeweils 16 Brennelement-Positionen 2 umfassen, während zwischen zwei benachbarten Rohren 5 jeweils zwei Reihen von Brennelement-Positionen 2 liegen, so dass der von den Rohren 5 umschlossene Gestellquerschnitt grösser als der nicht umschlossene Querschnitt ist. Dies sorgt für eine grosse Festigkeit, wobei die Rohre 5, wie in Fig. 2 zu sehen ist, einen oberen Tragverband 7 mit einer als unterer Tragverband 8 dienenden Grundplatte verbinden. Die Verbindung erfolgt mit Hilfe von Verstärkungen am oberen und unteren Ende der Rohre 5, die in Fig. 1 als Flansche 9 dargestellt sind und sich nicht bis in die Ecken 6 erstrecken.

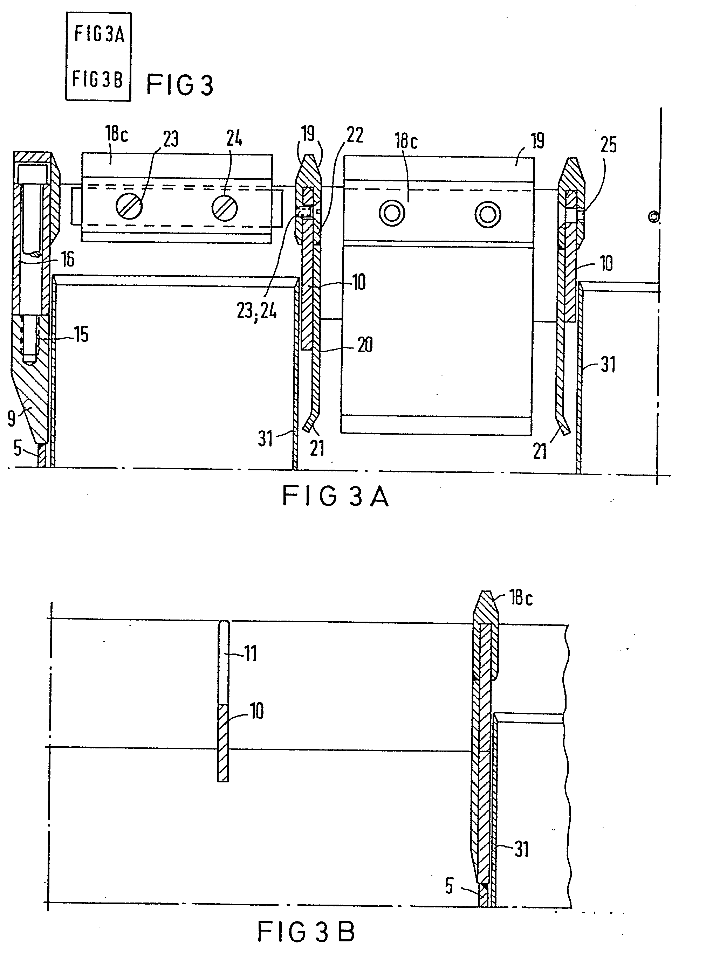

Der obere Tragverband 7 ist aus Leisten 10 und 16 zusammengefügt. Die Leisten 10 bestehen aus nichtrostendem Stahl und haben ein Flachprofil mit 5 mm Dicke und 80 oder 100 mm Höhe. Sie verlaufen rechtwinklig zueinander und sind mit Einschnitten 11 versehen (Fig. 3b), die sich entweder von unten oder oben rechtwinklig zur Längsrichtung über die halbe Höhe der Leisten 10 erstrecken, so dass diese an den Kreuzungspunkten ineinandergeschoben werden können. Das Zusammenfügen erfolgt nach einem Steckplan, der die Ausbildung der Einschnitte 11 berücksichtigt.

Die zuerst montierten Leisten 10, die unmittelbar neben dem Rand und dann parallel dazu mit zwei Rasterteilungen Abstand aufgelegt werden, haben die Einschnitte 11 im oberen Bereich. Die als nächstes montierten Leisten 10 verlaufen rechtwinklig dazu unmittelbar neben dem Rand und eine Rasterteilung parallel dazu. Sie haben untere Einschnitte 11 für die zuerst montierten Leisten und obere Einschnitte 11 an den dazwischen liegenden Kreuzungsstellen. Entsprechend besitzen die zum Schluss in der Mitte des Gestellquerschnittes zuletzt montierten zwei parallelen Leisten 10 nur nach unten offene Einschnitte 11, während die davor, also als vorletztes ebenfalls in der Gestellmitte, aber rechtwinklig zu den letzten montierten Leisten 10 ausser nach unten offenen Einschnitten 11 noch zwei benachbarte Einschnitte im oberen Bereich für die zuletzt zu montierenden Leisten 10 haben.

Die vorgenannte Ausbildung und Montage führt zu einer geringen Materialschwächung und einer entsprechend grossen Festigkeit. Deshalb ergibt die optimierte Montage eine Verbindung, die seitlich zu den Brennelement-Positionen 2 verlaufende Kräfte aufnimmt, ohne dass Biegemomente entstehen können, weil die Breite der Einschnitte 11 geringfügig grösser als die Dicke der Leisten ist. Die Länge der Leisten 10 entspricht mit 1700 mm der Kantenlänge des quadratischen Gestellquerschnittes.

Die am oberen Ende der Rohre 5 angeschweissten Flanschen 9 weisen Gewindebohrungen 15 auf, auf die Randleisten 16 aufgeschraubt werden (Fig. 3a). Die Randleisten 16 dienen zur Festlegung der Leisten 10 am oberen Rand des Gestellquerschnittes. Dort greifen die Leisten 10 mit hakenartigen Enden 12 über einen Absatz 13 der Flansche 9, so dass sie in horizontaler und vertikaler Richtung festgelegt sind (Fig. 2). Zusätzlich zu der Verhakung können am Rand auch noch Schrauben zur Verbindung der Leisten 10 mit den Flanschen 9 verwendet werden.

Im Bereich jeder Brennelement-Position 2 sind, wie in Fig. 3a dargestellt ist, auf die Leisten 10 Führungsstücke 18 in Form von Führungsschienen 18c aufgeschraubt, die einen aus der Fig. 3a ersichtlichen weitgehend symmetrischen U-förmigen Querschnitt aufweisen und die Brennelemente führen und halten. Am oberen Ende besitzt das Führungsstück 18 zwei Einlaufschrägen 19. An dem einen Schenkel 22 ist eine einseitige Verlängerung 20 angeschweisst, die unten mit einem zur Leiste 10 abgewinkelten Rand 21 endet. Jeweils zwei Schrauben 23 und 24 greifen durch die Leisten 10 in Gewindebohrungen 25 der Führungsstücke 18, die sich in Richtung des Brennelementquerschnittes nur über 100 mm erstrecken und damit kürzer sind als die Kantenlänge der Brennelemente. Die Führungsstücke 18 können auch kreuzförmig ausgebildet und den Ecken der Brennelement-Positionen zugeordnet sein, wie in Fig. 2 oben dargestellt ist. Andere polygonale Führungsstücke sind in Fig. 2 am Gestellboden bei 18a dargestellt.

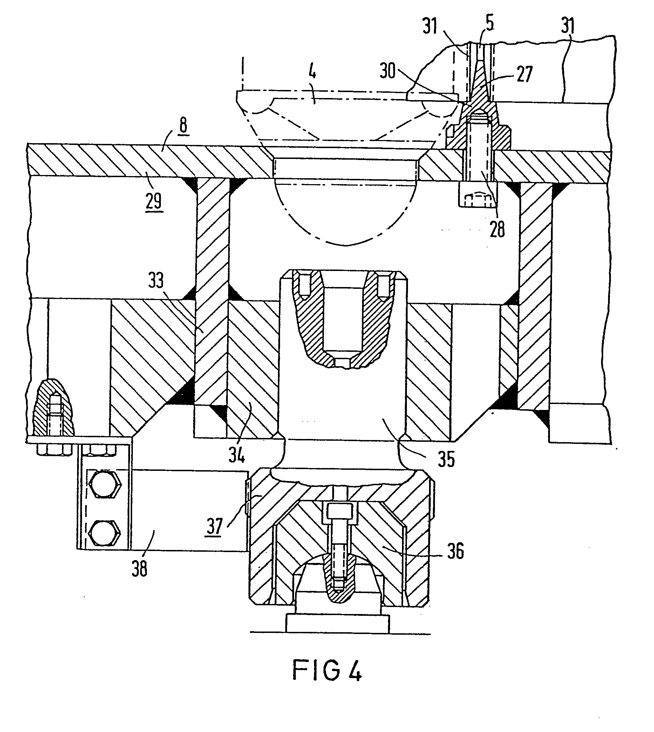

Die Fig. 4 zeigt, dass die Rohre 5 am unteren Ende in einen angeschweissten Flansch 27 auslaufen, der eine Verstärkung bildet und sich nicht bis in die Ecken 6 des Rohrquerschnittes erstreckt. Der Flansch 27 ist mit Schrauben 28 an einer Grundplatte 29 befestigt, die wesentlicher Bestandteil des unteren Tragverbandes 8 ist. Der Flansch 27 besitzt Absätze 30, auf denen Hüllen 31 aus einem neutronenabsorbierenden Material, insbesondere aus Borstahl, aufsitzen. Die Hüllen 31 umschliessen entweder jede Brennelement-Position 2 oder nach einem Schachbrettmuster jede zweite Brennelement-Position 2 und werden am oberen Ende, wie Fig. 3 zeigt, von den Leisten 10 in seitlicher Richtung gehalten.

Die Unterseite der Grundplatte 29 ist mit Leisten 33 verschweisst, die zur Versteifung dienen und ihrerseits mit Tragplatten 34 verschweisst sind. In Gewindebohrungen der Tragplatten 34 sind Stützkörper 35 eingeschraubt, die zusammen mit Stützklötzen 36 in der Höhe einstellbare Füsse 37 für das Gestell 1 bilden. Die Höheneinstellung wird mit angeschraubten Blechen 38 gesichert.

Die Erfindung kommt nicht nur für die dargestellten Gestelle mit quadratischem Querschnitt in Frage. Sie ergibt vielmehr die gleichen Vorteile der Vorfabrikation und der einfachen Montage auch bei rechteckigen oder allgemein polygonalen Querschnitten.

## Patentansprüche

1. Lagergestell für stabförmige Brennelemente (4) mit polygonalem, vorzugsweise quadratischem Querschnitt, mit einem oberen (7) und einem unteren Tragverband (8), durch den bestimmte Positionen für die Brennelemente festgelegt sind, und mit zwischen den Tragverbänden angeordneten Stützeinrichtungen, die als Rohre (5) ausgebildet sind und mindestens eine Brennelement-Position (2) umschliessen, dadurch gekennzeichnet, dass die Rohre (5) am oberen und unteren Ende durch angeschweisste Flansche (9, 27) verstärkt sind, dass an den oberen Flanschen (9) Leisten (10) befestigt sind, die zur Bildung des oberen Tragverbandes (7) in an sich bekannter Weise Einschnitte (11) aufweisen und mit diesen entsprechend dem Brennelement-Querschnitt winklig zueinander verschränkt sind, und dass die Rohre (5) mit den unteren Flanschen (27) am unteren Tragverband (8) befestigt sind.

2. Lagergestell nach Anspruch 1, dadurch gekennzeichnet, dass die Länge der Leisten (10) grösser ist als die Querschnittsabmessungen der Rohre (5), während die Höhe der Leisten (10) kleiner als die Breite des Brennelement-Querschnittes ist.

3. Lagergestell nach Anspruch 2, dadurch gekennzeichnet, dass die Länge der Leisten (10) so gross wie die Querschnittsabmessungen des Lagergestelles (1) ist.

4. Lagergestell nach Anspruch 1, 2 oder 3, dadurch gekennzeichnet, dass die Einschnitte (11) im oberen oder unteren Bereich der Leisten (10) nach einem Steckplan angeordnet sind, nach dem die Montage auf den Rohren (5) erfolgt.

5. Lagergestell nach einem der Ansprüche 1 bis 4, dadurch gekennzeichnet, dass mindestens einzelne Leisten (10) an den oberen Verstärkungen (9) der Rohre (5) in horizontaler und vertikaler Richtung festgelegt sind.

6. Lagergestell nach einem der Ansprüche 1 bis 5, dadurch gekennzeichnet, dass an den Leisten (10) Führungsstücke (18) für das Einführen oder Anliegen von Brennelementen (4) lösbar befestigt sind.

7. Lagergestell nach Anspruch 6, dadurch gekennzeichnet, dass die Länge der Führungsstücke (18) kürzer als die Kantenlänge der Brennelemente ist.

8. Lagergestell nach Anspruch 6 oder 7, dadurch gekennzeichnet, dass die Führungsstücke (18) einen zumindest weitgehend symmetrischen Querschnitt aufweisen und jeweils zur Führung von zwei Brennelementen (2) auf gegenüberliegenden Seiten der Leiste (10) dienen.

9. Lagergestell nach Anspruch 1 bis 8, dadurch gekennzeichnet, dass die Leisten (10) zur Distanzierung von an sich bekannten Hüllen (31) aus neutronenabsorbierendem Material dienen, die die Brennelementpositionen (2) umschliessen.

## Claims

1. A supporting frame for rod-shaped fuel elements (4) of polygonal, preferably square, cross-section, having an upper (7) and a lower carrier unit (8), by means of which specific positions for the fuel elements are determined, and supporting devices are arranged between the carrier units, which are in the form of pipes (5) and surround at least one fuel element position (2), characterised in that the pipes (5) are reinforced by welded flanges (9, 27) at the upper and lower ends; that strips (10) are secured to the upper flanges (9), which strips for the formation of the upper carrier unit (7), are provided in known manner with slots (11), and are connected together by said slots at an angle to one another in accordance with the fuel element cross-section; and that the pipes (5) have their lower flanges (27) secured to the lower carrier unit (8).

2. A supporting frame according to Claim 1, characterised in that the length of the strips (10) is greater than the cross-sectional dimensions of the pipes (5), whilst the height of the strips (10) is less than the width of the fuel element cross-section.

3. A supporting frame according to Claim 2, characterised in that the length of the strips (10) equals the cross-sectional dimensions of the bearing support (1).

4. A supporting frame according to Claim 1, 2 or 3, characterised in that the slots (11) in the upper or lower region of the strips (10), are arranged according to a plug-in plan, in accordance with which the assembly on the pipes (5) is effected.

5. A supporting frame according to one of Claims 1 to 4, characterised in that at least single strips (10) are secured to the upper reinforcements (9) of the pipes (5) in the horizontal and vertical directions.

6. A supporting frame according to one of Claims 1 to 5, characterised in that guide pieces (18) for the insertion or fitting of fuel elements (4) are detachably secured to the strips (10).

7. A supporting frame according to Claim 6, characterised in that the length of the guide pieces (18) is less than the edge length of the fuel elements.

8. A supporting frame according to Claim 6 or Claim 7, characterised in that the guide pieces (18) have at least a substantially symmetrical cross-section and respectively serve to guide two fuel elements (2) on opposite sides of the strip (10).

9. A supporting frame according to Claim 1 to 8, characterised in that the strips (10) serve to space apart casings (31) which are known per se and consist of neutron-absorbing material, and which surround the fuel element positions (2).

## Revendications

1. Râtelier pour éléments combustibles en forme de barreaux (4), possédant une section transversale polygonale, de préférence carrée, comportant un ensemble supérieur de support (7) et un ensemble inférieur de support (8), au moyen desquels les positions déterminées pour les éléments combustibles sont fixés, et comportant des dispositifs de soutien disposés entre les ensembles de support et qui sont réalisés sous la forme de tubes (5) et entourent au moins une position (2) d'un élément combustible, caractérisé par le fait que les tubes (5) sont renforcés à leurs extrémités supérieure et inférieure par des brides soudées (9, 27), qu'aux brides supérieures (9) sont fixées des baguettes (10) qui comportent de façon connue en soi des encoches (11) pour la formation de l'ensemble supérieur de support (7) et s'emboîtent réciproquement dans ces encoches selon un certain angle conformément à la section transversale de l'élément de combustible, et que les tubes (5) sont fixés par les brides inférieures (27) à l'ensemble inférieur de support (8).

2. Râtelier suivant la revendication 1, caractérisé par le fait que la longueur des baguettes (10) est supérieure aux dimensions en section transversale des tubes (5), tandis que la hauteur des baguettes (10) est inférieure à la largeur des sections transversales de l'élément de combustible.

3. Râtelier suivant la revendication 2, caractérisé par le fait que la longueur des baguettes (10) est égale aux dimensions en coupe transversale du râtelier (1).

4. Râtelier suivant la revendication 1, 2 ou 3, caractérisé par le fait que les encoches (11) sont disposées dans la partie supérieure ou dans la partie inférieure des baguettes (10) selon un schéma d'enfichage en fonction duquel le montage est réalisé sur les tubes (5).

5. Râtelier suivant l'une des revendications 1 à 4, caractérisé par le fait qu'au moins des baguettes individuelles (10) sont fixées suivant la direction horizontale et suivant la direction verticale sur les parties renforcées supérieures (9) des tubes (5).

6. Râtelier suivant l'une des revendications 1 à 5, caractérisé par le fait que des éléments de guidage (18) utilisés pour l'introduction ou la mise en place d'éléments combustibles (4) sont fixés de façon détachable aux baguettes (10).

7. Râtelier suivant la revendication 6, caractérisé par le fait que la longueur des éléments de guidage (18) est inférieure à la longueur des côtés des éléments combustibles.

8. Râtelier suivant la revendication 6 ou 7, caractérisé par le fait que les éléments de guidage (18) possèdent une section transversale au moins dans une large mesure symétrique et servent respectivement au guidage de deux éléments combustibles (2) sur des côtés opposés de la baguette (10).

9. Râtelier suivant les revendications 1 à 8, caractérisé par le fait que les baguettes (10) servent à entretoiser des enveloppes (31) connues en soi, constituées en un matériau absorbant les neutrons et qui entourent les positions (2) des éléments combustibles.

FIG 1

FIG 2

FIG 3

FIG 3A

FIG 3B

FIG 3 A

FIG 3 B

FIG 4